(19)

Europäisches
Patentamt
European
Patent Office
Office européen
des brevets

(11) **EP 2 448 334 A1**

(12) **EUROPEAN PATENT APPLICATION**
published in accordance with Art. 153(4) EPC

(43) Date of publication:
**02.05.2012 Bulletin 2012/18**

(21) Application number: **09846330.0**

(22) Date of filing: **22.06.2009**

(51) Int Cl.:
***H04W 52/00*** (2009.01)

(86) International application number:
**PCT/CN2009/000685**

(87) International publication number:
**WO 2010/148530 (29.12.2010 Gazette 2010/52)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Alcatel Lucent
75007 Paris (FR)**

(72) Inventors:
• **YANG, Lin
Shanghai 201206 (CN)**

• **LIU, Jin
Shanghai 201206 (CN)**
• **ZHANG, Xiaobo
Shanghai 201206 (CN)**

(74) Representative: **2SPL Patentanwälte
Würmtalstraße 119
81375 München (DE)**

(54) **METHOD AND DEVICE FOR EXECUTING MULTIPLE COMPONENT CARRIERS WHICH ARE AGGREGATED TO TRANSMIT**

(57)     A method for processing multiple Component Carriers (CCs) to be aggregated for transmission is provided in the present invention, the method comprising the steps of: acquiring a time domain signal of each of the multiple CCs; applying multiple fixed phase rotations respectively to the acquired time domain signal by utilizing phase rotation values in a set of phase rotations, so as to obtain multiple phase rotation versions of each CC; randomly selecting one of the multiple phase rotation versions of each CC to respectively constitute multiple candidate transmission groups, and acquiring an amplitude sum of the phase rotation versions for each of the multiple candidate transmission groups; determining a candidate transmission group having the minimum amplitude sum; and transmitting multiple phase rotation versions in the determined candidate transmission group having the minimum amplitude sum. The present invention substantively provides a general solution capable of minimizing CM/PAPR of aggregated CCs for UL and DL.

Fig. 1

EP 2 448 334 A1

**Description**

FIELD OF THE INVENTION

The present invention relates to the communication field, and more particularly to a method and device for processing component carriers to be aggregated for transmission in an LTE-A system in order to reduce CM/PAPR of aggregated component carriers for uplink and downlink.

BACKGROUND OF THE INVENTION

With the 3G industry gradually entering a climax worldwide, Long Term Evolution (LTE) undertaking a mission of evolution from 3G to 4G has been attracting attentions of the industry. As an evolution of LTE, Long Term Evolution-Advanced (LTE-A) attracts more and more attentions due to its advantages in providing low cost facilities and terminals, increasing power efficiency, reducing relay transmission cost and decreasing terminal complexity.

In the LTE-A system, increase of Cubic Metric (CM) related to Component Carrier (CC) aggregation is caused mainly due to the following two factors: repeated Downlink (DL) Reference Signal (RS) patterns across the CCs and the number of aggregated CCs.

For DL, the CM increase caused by the repeated RS patterns can be eliminated by breaking down the RS periodicity. However, Uplink (UL) transmission is more sensitive to the CM/PAPR (Peak-to-Average Power Ratio) property. For UL, the high CM/PAPR caused by the increased number of aggregated CCs may decrease the performance of UL transmission significantly. Generally speaking, the lower the CM/PAPR value is, the higher the power amplifier (PA) efficiency is and the larger the coverage is. Therefore the CM/PAPR value should be minimized to limit the power backoff in User Equipment (UE).

At present, some proposals (e.g. R1-084195, R1-083706, R1-090096 and R1-084196) have been proposed for DL in order to break down the periodicity of an RS sequence, and inventive ideas of these proposals are quite straight forward. It is respectively proposed to use different physical cell IDs or to apply a fixed time/cyclic time/phase offset for each CC to break down the periodicity of the RS. However, these proposals may require designing asymmetric CC aggregation or may cause problem in backward compatibility, and meanwhile they cannot solve the CM/PAPR increase caused by aggregated CCs.

In short, no technical solutions at present can solve the problem of the CM/PAPR increase caused by both the repeated RS and the aggregated CCs.

Non Patent Literature:

[1] R1-084195, "Issues on the physical cell ID allocation to the aggregated component carriers", LG Electronics, November 10th - 14th, 2008, www.3gpp.org.

[2] R1-083706, "DL/UL Asymmetric Carrier aggregation", Huawei, Sept 29th - Oct 3rd 2008, www.3gpp.org.

[3] R1-090096 "DL RS for carrier aggregation with reduced PAPR", Samsung, Jan. 12 - Jan. 16, 2009, www.3gpp.org.

[4] R1-084196, "Initial Access Procedure in LTE-Advanced", LG Electronics, November 10th - 14th, 2008, www.3gpp.org.

SUMMARY OF THE INVENTION

In view of the above problems, the present invention is proposed.

According to one aspect of the present invention, a method for processing multiple CCs to be aggregated for transmission is provided, the method comprising steps of: acquiring a time domain signal of each of the multiple CCs; applying multiple fixed phase rotations respectively to the acquired time domain signal by utilizing phase rotation values in a set of phase rotations, so as to obtain multiple phase rotation versions of each CC; randomly selecting one of the multiple phase rotation versions of each CC to respectively constitute multiple candidate transmission groups, and acquiring an amplitude sum of the phase rotation versions for each of the multiple candidate transmission groups; determining a candidate transmission group having the minimum amplitude sum; and transmitting multiple phase rotation versions in the determined candidate transmission group having the minimum amplitude sum.

Preferably, the step of acquiring a time domain signal of each of the multiple CCs includes performing an Inverse Fast Fourier Transform on each of the multiple CCs.

Preferably, the method is applied to an LTE-A system.

Preferably, the method is applied to a transmitting end of an LTE-A system.

According to another aspect of the present invention, a device for processing multiple CCs to be aggregated for transmission is provided, comprising: an acquiring unit for acquiring a time domain signal of each of the multiple CCs; a phase rotation unit for applying multiple fixed phase rotations respectively to the acquired time domain signal by utilizing phase rotation values in a set of phase rotations, so as to obtain multiple phase rotation versions of each CC; a summing unit for randomly selecting one of the multiple phase rotation versions of each CC to respectively constitute multiple candidate transmission groups, and acquiring an amplitude sum of the phase rotation versions for each of the multiple candidate transmission groups; a determining unit for determining a candidate transmission group having the minimum amplitude sum; and a transmitting unit for transmitting multiple phase rotation versions in the determined candidate transmission group having the minimum amplitude sum.

Preferably, the acquiring unit further includes an Inverse Fast Fourier Transform unit for performing an Inverse Fast Fourier Transform on each of the multiple CCs.

Preferably, the device is applied to an LTE-A system.

Preferably, the device is applied to a transmitting end of an LTE-A system.

In conclusion, the present invention provides a general solution capable of minimizing CM/PAPR of aggregated CCs for UL and DL. By utilizing the present invention, it is possible to avoid broadcasting different physical cell IDs or breaking down the DL RS periodicity for mitigating CM for DL, and meanwhile it is possible to effectively eliminate the two factors for CM/PAPR increase, i.e. the repeated DL RS patterns across the CCs and the number of aggregated CCs as described above.

BRIEF DESCRIPTION OF THE DRAWINGS

The above and other objects, features and advantages of the present invention will become more apparent by making references to the following detailed description of nonrestrictive embodiments of the present invention in conjunction with the accompanying drawings, in which:

FIG 1 illustrates a flowchart of the method for processing multiple CCs to be aggregated for transmission according to embodiments of the present invention.

FIG 2 illustrates a block diagram of the device for processing multiple CCs to be aggregated for transmission according to embodiments of the present invention.

FIG 3 illustrates a detailed schematic diagram of the method for processing multiple CCs to be aggregated for transmission according to embodiments of the present invention.

FIG 4 illustrates a simulation chart of the comparison between the present invention and the prior art regarding PAPRs of 4 aggregated CCs and 5 aggregated CCs in DL; and

FIG 5 illustrates a simulation chart of the comparison between the present invention and the prior art regarding PAPRs of 2-5 aggregated CCs in UL.

DETAILED DESCRIPTION OF EMBODIMENTS

Embodiments of the present invention are now described in detail with reference to the accompanying drawings. In the following description, some specific embodiments are only used for descriptive purposes and shall not be construed as any limitation on the present invention, and they are merely examples of the present invention.

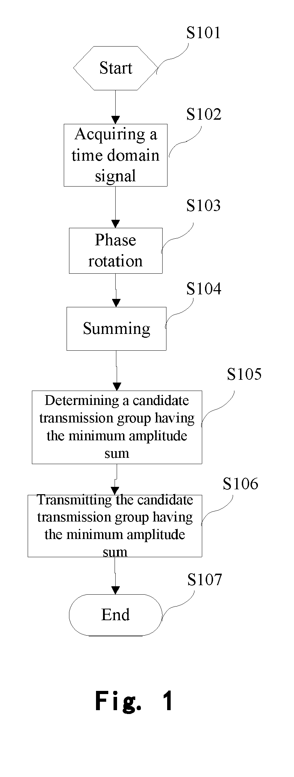

Firstly referring to FIG 1, which illustrates a flowchart of the method for processing multiple CCs to be aggregated for transmission according to embodiments of the present invention. As shown in FIG 1, the method starts at Step S101. At Step S102, a time domain signal of each of the multiple CCs is acquired. At Step S103, multiple fixed phase rotations are applied respectively to the acquired time domain signal by utilizing the phase rotation values in a set of phase rotations, so as to obtain multiple phase rotation versions of each CC. Then, the method proceeds to Step S104, where one of the multiple phase rotation versions of each CC is randomly selected to respectively constitute multiple candidate transmission groups, and an amplitude sum of the phase rotation versions is acquired for each of the multiple candidate transmission groups. Then, at Step S105, a candidate transmission group having the minimum amplitude sum is determined, and the multiple phase rotation versions in the determined candidate transmission group having the minimum amplitude sum are transmitted at Step S106. Finally, the method ends at Step S107.

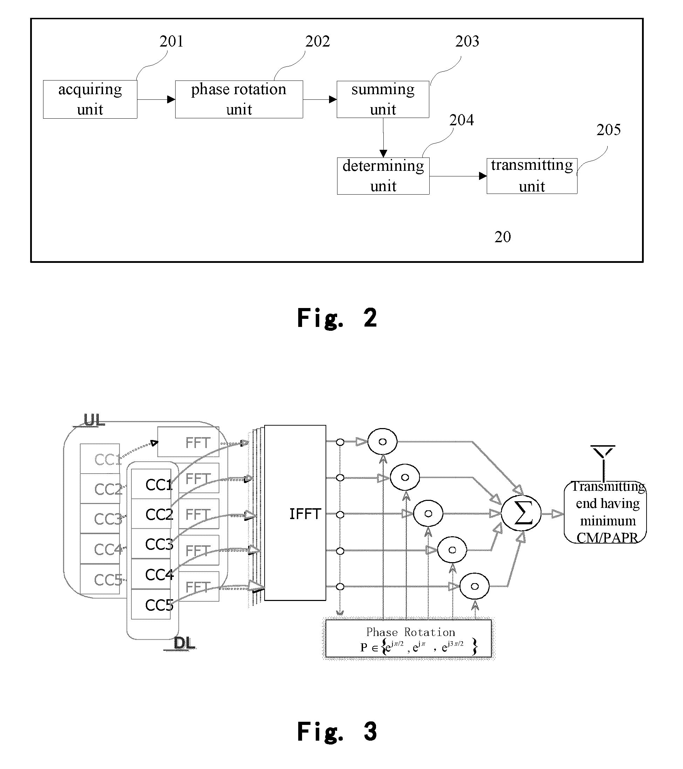

FIG 2 illustrates a schematic block diagram of the device 20 for processing multiple CCs to be aggregated for transmission according to embodiments of the present invention.

As shown in FIG 2, the device 20 comprises an acquiring unit 201 for acquiring a time domain signal of each of the multiple CCs; a phase rotation unit 202 for applying multiple fixed phase rotations respectively to the acquired time domain signal by utilizing phase rotation values in a set of phase rotations, so as to obtain multiple phase rotation versions of each CC; a summing unit 203 for randomly selecting one of the multiple phase rotation versions of each CC to respectively constitute multiple candidate transmission groups and acquiring an amplitude sum of the phase rotation versions for each of the multiple candidate transmission groups; a determining unit 204 for determining a candidate transmission group having the minimum amplitude sum; and a transmitting unit 205 for transmitting the multiple phase rotation versions in the determined candidate transmission group having the minimum amplitude sum. The acquiring unit 201 may further include an Inverse Fast Fourier Transform unit (not shown) for performing an Inverse Fast Fourier Transform on each of the multiple CCs.

In the following, the method according to the present invention will be described in more detail with reference to FIG 3. FIG 3 is a detailed schematic diagram illustrating the method for processing multiple CCs to be transmitted according to embodiments of the present invention, wherein the methods for UL and DL are respectively shown.

For DL, firstly, an Inverse Fast Fourier Transform is performed on each of M CCs to obtain time domain signals $\{S^{(m)}\}$ of the M CCs, wherein m is an integer from 1 to M, and then phase rotations $a^{\{m\}}$ are applied respectively to the time domain signals $\{S^{(m)}\}$ to obtain $\{S(m).a^{\{m\}}\}$, wherein $a^{\{m\}} \in \{A(0),A(1),..., A(P-1)\}$, P is the number of phase rotations applied to each CC. Here, the phase rotation values in $\{A(0),A(1),...,A(P-1)\}$ may be randomly selected. Then, $\{S^{(m)}.a^{\{m\}}$

are summed up by using the formula of $\max_{k}\left[\left|\sum_{m=0}^{M-1}(S^{(m)}.a^{(m)})\right|\right]$ , wherein K=0, 1, ... , N-1, and N is the number of sub-carriers. Then, a corresponding set of $\{S^{(m)}.a^{\{m\}}\}$ having the minimum amplitude sum is selected, for which the phase rotations applied to each CC form one combination $\{a^{\{0\}},a^{\{1\}},...,a^{\{M-1\}}\}$ of $P^{M}$ combinations constituted by P values from each $a^{\{m\}}$, and then the set of time domain signals corresponding to which are transmitted. In this manner, the CM/PAPR corresponding to CCs may be minimized, i.e. only the CC combination producing the lowest CM/PAPR is selected for transmission. As shown in FIG 3, in this embodiment, each time domain signal is respectively applied with phase rotations of $j\pi/2$, $j\pi$ and $j3\pi/2$, i.e. $a^{\{m\}} \in \{e^{j\pi/2},e^{j\pi},e^{j3\pi/2}\}$, i.e. P=3. Since this embodiment takes 5 CCs as an example, i.e. M=5, and meanwhile 3 phase rotations are applied to each CC, there are $3^5$ combinations here. Since for UL, SC-FDMA is adopted, it is different from the DL situation in that it is necessary to perform a Fast Fourier Transform on the 5 CCs for the UL situation prior to the above processes, while the rest processes are the same as DL.

It can be seen from the process shown in FIG 3 that, the method for processing aggregated CCs to be transmitted according to embodiments of the present invention can transform time domain signals to mitigate the "peaks" without incurring any distortion. Since a phase rotation is added following RS, a receiver can easily detect a phase offset as part of a channel and compensate it in the equalization process, and thus no auxiliary information is needed. The method according to embodiments of the present invention can apply the phase rotation to CCs not only in the scenario of the DL transmission but also in that of the UL transmission.

The method shown in FIG 3 is to apply multiple phase rotations in the time domain to each CC, and then only to select the combination producing the lowest CM/PAPR. This method not only mitigates the CM increase caused by RS periodicity but also reduces the inherent CM/PAPR value by 2dB for both UL and DL.

It needs to be pointed out that 3 phase rotations in FIG 3 are only used for descriptive purposes and should not be construed as limitation of the present invention. In fact, for the case of 5 CCs, it may be sufficient to acquire a satisfying performance with 2 phase rotations.

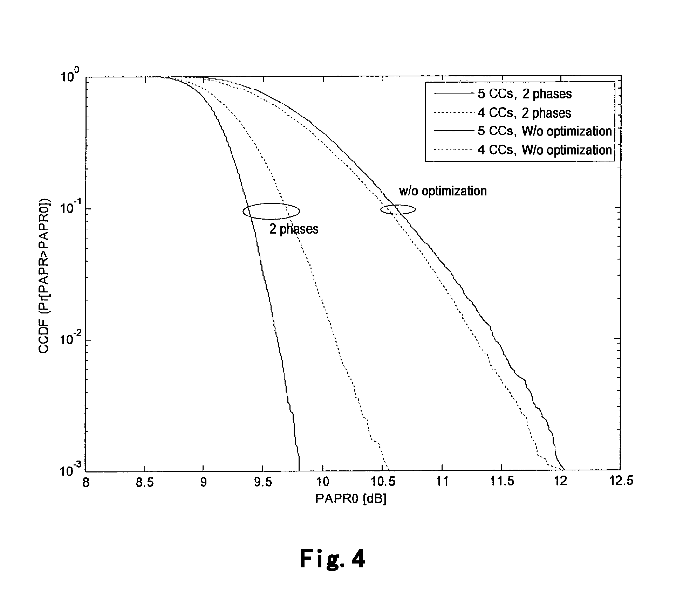

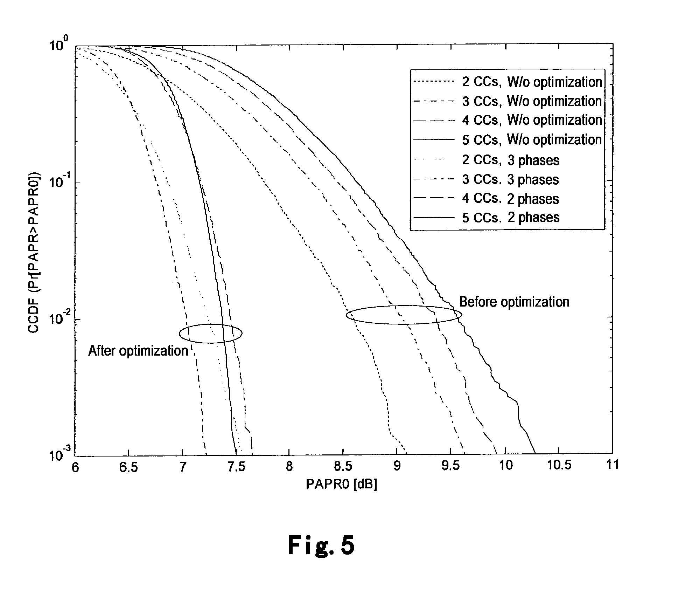

The existing technical solution can only mitigate the extra CM/PAPR increase caused by the repeated RS. Disregarding that, an improvement of the present invention with respect to the prior art in terms of PAPR is specifically described by making references to the simulation charts shown in FIG 4 and FIG 5.

The simulations shown in FIG 4 and FIG 5 are executed on the basis of the following Table 1.

Table 1. Simulation Assumption

| Parameters | Assumed Values |
|---|---|
| Number of aggregated CCs | 1 to 5 |
| Bandwidth of each CC | 20MHz |
| Scheduled bandwidth of each CC | 24 RBs |
| Number of sub-carriers of each CC | 2048 |
| $n_{cs}$ and u | Different u and $n_{cs}$ ($\alpha = 2\pi n_{cs}/12$, u is the number of the group) adopted in different CCs. |
| UL/DL multiple access schemes | SC-FDMA/OFDMA |
| RS power (with respect to data) | 3 dB |
| CM computing formula | $CM = \dfrac{20\log_{10}\{rms[v_{norm}^{3}(t)]\}-1.52}{1.56}\ dB$ |
| | |

FIG 4 illustrates a simulation chart of the comparison between the present invention and the prior art regarding PAPRs of 4 aggregated CCs and 5 aggregated CCs in DL. The horizontal axis in FIG 4 represents the threshold PAPR0 (in the unit of dB), and the figure on the vertical axis represents the probability that the PAPR of each simulation symbol is greater than a certain threshold value (the horizontal axis PAPRO), which is represented by Complementary Cumulative Distribution Function (CCDF) in this embodiment. The left two lines in FIG 4 respectively represent the situations of 4 aggregated CCs and 5 aggregated CCs with 2 phase rotations, while the right two lines respectively represent the situations of 4 aggregated CCs and 5 aggregated CCs without optimization (i.e. phase rotation). It can be seen apparently from FIG 4 that no matter it is 4 aggregated CCs or 5 aggregated CCs, the PAPRs with 2 phase rotations is less than those without optimization.

FIG 5 illustrates a simulation chart of the comparison between the present invention and the prior art regarding UL PAPRs of 2-5 aggregated CCs. The horizontal axis and the vertical axis in FIG 5 represent the same as those in FIG 4. The left four lines in FIG 5 respectively represent the situations of 2-5 aggregated CCs with phase rotations, while the right four lines respectively represent the situations of 2-5 aggregated CCs without optimization (i.e. phase rotation). It can be seen apparently from the right four lines in FIG 5 that in a situation without optimization, the greater the number of aggregated CCs is, the greater the CM/PAPR is. This is because: for UL, as the number of aggregated CCs increases, the low PAPR property of SC-FDMA will vanish even without the repeated RS (2dB increase from 2CCs to 5CCs at the level of $CCDF=10^{-3}$). On the contrary, it can be seen from the left four lines in FIG 5 that the phase rotation scheme proposed by the present invention may keep PAPRs for multiple CCs at the same level (7-8dB) as that for 1 CC.

Table 2 illustrates the comparison between the present invention and the prior art in CM (PAPR).

Table 2. CM Improvement

| The number of CCs | | 1 | 2 | 3 | 4 | 5 |
|---|---|---|---|---|---|---|
| UL | RS+Data (prior art) | 1.2 | 2.61 | 3.05 | 3.3 | 3.6 |
| | RS+Data (present invention) | 1.2 | 2.3 | 2.6 | 2.85 | 2.95 |
| DL | RS+Data (prior art) | 4.01 | 4.31 | 4.71 | 5.12 | 5.51 |
| | RS+Data (present invention) | 4.01 | 3.86 | 3.82 | 3.79 | 3.76 |

Thus it can be seen that the scheme proposed by the present invention not only releases the restriction of RS non-periodicity for DL, but also reduces the CM/PAPR caused by the increased number of CCs for both DL and UL. It is unnecessary for the present invention to broadcast different physical cell IDs in different CCs. In addition, no auxiliary information is needed, which means that all processing is performed in the transmitter, and the receiver does not need any modification. Thus, the scheme proposed by the present invention is a fully backward compatible and effective approach to reduce CM/PAPR.

In addition, a UE in LTE-A can be aware of the phase rotations and may be able to utilize them for DL channel estimation. A LTE Release 8 will use only a single CC and the phase rotation will only appear as a part of the channel. Phase rotations are thus transparent to UEs of the LTE Release 8. That is to say, the scheme proposed by the present invention is also applicable to the LTE Release 8.

So far, the present invention has been described in conjunction with preferred embodiments. It should be understood that those skilled in the art can carry out various other modifications, substitutions and additions without departing from the spirit or scope of the present invention. Thus, the scope of the present invention should be defined by the appended claims rather than the above specific embodiments.

PRACTICAL APPLICABILITY

The CM/PAPR increase issues related to carrier aggregation are being discussed in 3GPP standard meetings for LTE-A. To be specific, for UL, the high CM/PAPR problem caused by the increased number of aggregated CCs may decrease the performance of UL transmission significantly. A lower CM/PAPR value means a higher power amplifier efficiency and larger coverage. The phase rotation method proposed by the present invention can minimize the CM/PAPR value to limit the power backoff for both eNBs and UEs without invoking receiver redesign and compatibility issues.

**Claims**

1. A method for processing multiple Component Carriers (CCs) to be aggregated for transmission, comprising steps of:

acquiring a time domain signal of each of the multiple CCs;
applying multiple fixed phase rotations respectively to the acquired time domain signal by utilizing phase rotation values in a set of phase rotations, so as to obtain multiple phase rotation versions of each CC;
randomly selecting one of the multiple phase rotation versions of each CC to respectively constitute multiple candidate transmission groups, and acquiring an amplitude sum of the phase rotation versions for each of the multiple candidate transmission groups;
determining a candidate transmission group having the minimum amplitude sum; and
transmitting multiple phase rotation versions in the determined candidate transmission group having the minimum amplitude sum.

2. The method according to claim 1, **characterized in that**: the step of acquiring a time domain signal of each of the multiple CCs comprises performing an Inverse Fast Fourier Transform on each of the multiple CCs.

3. The method according to claim 1, **characterized in that**: the method is applied to a Long Term Evolution-Advanced (LTE-A) system.

4. The method according to claim 3, **characterized in that**: the method is applied to a transmitting end of the LTE-A system.

5. A device for processing multiple Component Carriers (CCs) to be transmitted, comprising:

an acquiring unit for acquiring a time domain signal of each of the multiple CCs;
a phase rotation unit for applying multiple fixed phase rotations respectively to the acquired time domain signal by utilizing phase rotation values in a set of phase rotations, so as to obtain multiple phase rotation versions of each CC;
a summing unit for randomly selecting one of the multiple phase rotation versions of each CC to respectively constitute multiple candidate transmission groups, and acquiring an amplitude sum of the phase rotation versions for each of the multiple candidate transmission groups;
a determining unit for determining a candidate transmission group having the minimum amplitude sum; and
a transmitting unit for transmitting multiple phase rotation versions in the determined candidate transmission group having the minimum amplitude sum

6. The device according to claim 5, **characterized in that**: the acquiring unit further comprises an Inverse Fast Fourier Transform unit for performing an Inverse Fast Fourier Transform on each of the multiple CCs.

7. The device according to claim 5, **characterized in that**: the device is applied to a Long Term Evolution-Advanced (LTE-A) system.

8. The device according to claim 7, **characterized in that**: the device is applied to a transmitting end of the LTE-A system.

S101

Start

S102

Acquiring a
time domain
signal

S103

Phase
rotation

S104

Summing

S105

Determining a candidate
transmission group having
the minimum amplitude
sum

S106

Transmitting the candidate
transmission group having
the minimum amplitude
sum

S107

End

Fig. 1

**Fig. 2**

**Fig. 3**

**Fig. 4**

**Fig. 5**

## INTERNATIONAL SEARCH REPORT

| International application No. |
| --- |
| PCT/CN2009/000685 |

**A. CLASSIFICATION OF SUBJECT MATTER**

H04W 52/00 （2009.01）i

According to International Patent Classification (IPC) or to both national classification and IPC

**B. FIELDS SEARCHED**

Minimum documentation searched (classification system followed by classification symbols)

IPC: H04B, H03D, H04Q, H04W

Documentation searched other than minimum documentation to the extent that such documents are included in the fields searched

Electronic data base consulted during the international search (name of data base and, where practicable, search terms used)

CNPAT,CNKI,WPI,EPODOC,3GPP: LTE, aggregate+, component, carrier?, phase, rotat+,CM,PAPR

**C. DOCUMENTS CONSIDERED TO BE RELEVANT**

| Category* | Citation of document, with indication, where appropriate, of the relevant passages | Relevant to claim No. |
| --- | --- | --- |
| T | 3GPP TSG RAN WG1 57; ALCATEL-LUCENT SHANGHAI BELL: " R1-092331;CM/PAPR　Reduction of　Aggregated Carriers for Uplink of LTE-Advanced"　June 29-July 3, 2009 (2009.6.29-2009.7.3), 3GPP TSG RAN WG1#57 , LOS ANGELES, CA, USA, the whole document | 1-8 |
| A | US2004/0004515A1 （TAKAHASHI, Hirotoshi et al.）08 Jan.2004(08.01.2004) the whole document | 1-8 |
| A | CN101278487A （WIONICS RESEARCH）01 Oct. 2008(01.10.2008) the whole document | 1-8 |

☐ Further documents are listed in the continuation of Box C.　　☒ See patent family annex.

| | |
| --- | --- |
| *　Special categories of cited documents:<br><br>"A"　document defining the general state of the art which is not considered to be of particular relevance<br><br>"E"　earlier application or patent but published on or after the international filing date<br><br>"L"　document which may throw doubts on priority claim (S) or which is cited to establish the publication date of another citation or other special reason (as specified)<br><br>"O"　document referring to an oral disclosure, use, exhibition or other means<br><br>"P"　document published prior to the international filing date but later than the priority date claimed | "T"　later document published after the international filing date or priority date and not in conflict with the application but cited to understand the principle or theory underlying the invention<br><br>"X"　document of particular relevance; the claimed invention cannot be considered novel or cannot be considered to involve an inventive step when the document is taken alone<br><br>"Y"　document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>08 Mar. 2010 （08.03.2010） | Date of mailing of the international search report<br><br>**01 Apr. 2010 (01.04.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>YANG Jibin<br><br>Telephone No. (86-10)62413491 |

Form PCT/ISA /210 (second sheet) (July 2009)

<div align="center">

**INTERNATIONAL SEARCH REPORT**
Information on patent family members

</div>

| | International application No. |
|---|---|
| | PCT/CN2009/000685 |

| Patent Documents referred in the Report | Publication Date | Patent Family | Publication Date |
|---|---|---|---|
| US2004/0004515A1 | 08.01.2004 | None | |
| CN101278487A | 01.10.2008 | WO2007014310 A2 | 01.02.2007 |
| | | US2007058693 A1 | 15.03.2007 |
| | | TW200713946 A | 01.04.2007 |

Form PCT/ISA /210 (patent family annex) (July 2009)